# EUROPEAN PATENT APPLICATION

(11) **EP 2 545 832 A1**
(43) Date of publication of application: **16.01.2013**
(21) Application number: 12176479.9
(22) Date of filing: 13.07.2012
(51) Int. Cl.: A47J 43/07

(54) **Blender**

(30) Priority: 13.07.2011 GB 201112047
(71) Applicant: Gort-Barten, Alex, Crawley, West Sussex RH11 7ST (GB)
(72) Inventor: Gort-Barten, Alex, Crawley, West Sussex RH11 7ST (GB)
(74) Representative: JENSEN & SON

(57) **Abstract**

A blender comprising a jug (2) adapted to receive a cutter assembly (7) comprising a plurality of opposed blades, each blade being angled away from the centre of the cutting assembly at a different from that of the other pairs. The cutter assembly is disposed in a way such that, in use, a first fixing zone is formed below the cutter assembly (7), a second mixing is above the cutter assembly (7) and optionally a chopping zone is formed the first and second mixing zones. The blender jug (2) being provided with a fin (9) disposed on an interior of the blender jug (2). The fin (9) has a face (11) with a curved cross-section such that a tangent at the apex of the fin (9) substantially points to the centre of the blender jug. A motor (5) rotates the cutter assembly (7) to create a vortex in the material within the blender jug (2).

## Description

The present invention relates to a blender.

Blender users desire greater functionality from blenders. Domestic and commercial blenders process and blend a broad range of food and beverage ingredients such as dairy products (e.g. milkshakes), smoothies and frozen cocktails (e.g. margaritas). However, different ingredients have different blend characteristics. For instance, some ingredients are easy to blend and blend quickly, while other ingredients or materials are very hard or lack homogeneity and are very difficult to process and blend.

Some blenders have different programmes to vary the blending speed and time depending on the material being blended. One of the problems with more traditional blenders is a tendency to over or under blend. Over-blending results in a watery end product, while under-blending may result in an uneven or chunky end product. The broad range of material users blend makes it difficult to produce a consistent texture.

Another common problem with conventional blenders is their propensity to cavitate. Many times when aggressive media is added to a drink, an air pocket will fo in the mix between the cutter assembly and the material to be blended. The air bubble between the material and the cutter assembly causes the material to fail to be blended by the blades, thus disrupting and reducing blend performance. This type of impairment of function is called cavitation. Cavitation is typically remedied by allowing the blender to continue operating until the pocket ruptures (as a result of vibration and/ or melting of ingredients). Alternatively, the container may be shaken to loosen the mix and dislodge the air pocket so the material to be blended can be worked by the cutter assembly.

GB2424081 discloses a blender that attempts to solve these problems by using feedback from the motor to detect when cavitation has occurred. If cavitation is detected then the speed of the motor is varied to eliminate the cavitation and the programme time increased to compensate. However, one drawback with this approach apart from the complexity of the control electronics is that there is a greater likelihood of the motor overheating due to the greater energy required.

EP0795290 discloses a blender which comprises a jar having a spindle with two assemblies of blades. Longitudinally extending ribs are formed on the inner wall of the jar and project towards the central axis of the jar to, in theory, create an upward lift of the material within the jar so that a vortex back through the centre is formed. In practice, the ribs simply disrupt the flow of the material because the rib surfaces are even and thus promote flow within the jar; further, cavitation is still a problem. As a result, the blender described in this document does not mix material effectively enough to significantly reduce cavitation.

CN201290615 also describes a blender comprising a jar and a plurality of blade assemblies and further comprising longitudinal elements adapted to improve mixing of the material within the jar. This blender suffers from the same problems experienced by the blender disclosed in EP0795290.

Similarly, US2007/0095961 discloses a blender comprising a jar and a blade assembly. The jar is arranged to receive a lining having teeth adapted to improve mixing and provide additional chopping action. Although this blender may provide increased mixing over standard blenders it does not allow material to be mixed thoroughly and therefore does not significantly reduce cavitation.

The present invention therefore seeks to provide a blender that reduces the likelihood of cavitation.

According to the invention there is provided a blender comprising a blender jug adapted to receive a cutter assembly, which cutter assembly is driven by a motor, wherein the cutter assembly is disposed in the blender jug such that, in use, there is a first mix zone in the jug below the cutter assembly and a second mix zone above the cutter assembly, wherein when the motor rotates the cutter assembly a vortex is created in material in the blender jug, wherein the blender jug is provided with a fin disposed on an interior surface of the blender jug, which fin has a curved face the fin being adapted to impede rotational travel in the material in the blender jug **characterised in that** the curved face faces the flow of the material in the blender jug such that the material is urged back towards the cutter assembly.

Advantageously, the curved face has a curved cross-section such that a tangent at the apex of the fin substantially points to the centre of the blender jug.

Preferably, the fin is adapted to cause the vortex wave to collapse. More preferably, the ratio of the distance of an apex of the fin normal to the interior circumference and the interior circumference to the radius of the blender jug is between 1/5 and 1/12.

In a preferred embodiment, the chop zone is approximately 1/3 of the height of the blender jug.

In another preferred embodiment, the fin extends approximately 1/6 of a radius from the interior circumference of the blender jug towards the interior of the blender jug.

Advantageously, the blender is provided with two fins located on substantially opposite sides of the blender jug interior wall.

Preferably, the cutter assembly comprises a plurality of blades disposed in different planes to one another.

The arrangement of the invention advantageously urges the ingredients to be blended back into a chopping zone and by doing so substantially reduces cavitation and the effects of cavitation while the curved fin provides for a particularly effective mixing.

An exemplary embodiment of the invention will now be described in greater detail with reference to the drawings in which:
Fig. 1 shows a cross-section of a blender
Fig. 2 shows a plan view of the blender
Fig. 3 shows a detail of a fin in the blender
Fig. 4 shows the cutter arrangement

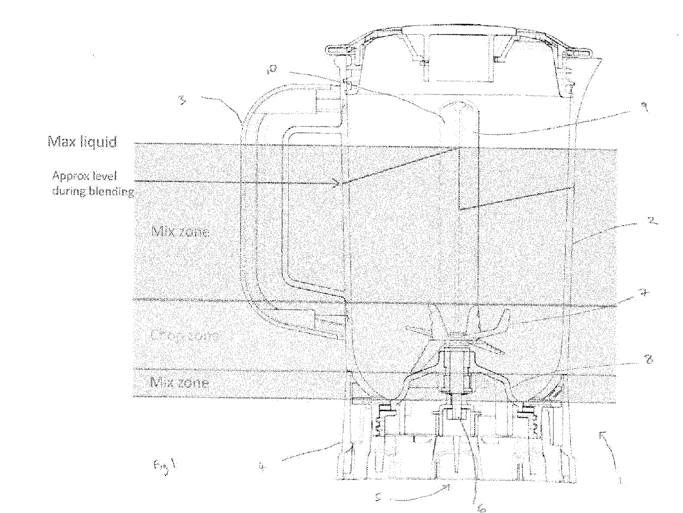

Figure 1 shows a cross section of a blender 1 comprising a jug 2 with a handle 3 mounted on a base 4. The base 4 houses a motor 5, which is adapted to impart drive to a drive shaft 6. The drive shaft 6 is attached to a cutter assembly 7 located in the jug 2 and extends through a sealed hole to engage with the motor 5. The jug can be released from the base so that its contents can be poured out after blending. Two fins 9,10 are arranged vertically on opposite sides of the interior wall of jug. The fins extend from near the top of the jug to approximately the height of the cutter assembly 7 in the installed position.

The lower part of the jug comprises an interior profile that extends in a curve from the substantially vertical walls of the jug towards the centre of the jug for about half a radius of the circumference of the jug. At this point it sealingly meets the support 8 for the cutter assembly 7. The support has a generally bell shaped profile on the surface facing the interior of jug. The centre of the support has a boss which receives the drive shaft 6. The contour of the bell shaped is relatively shallow towards the base of the jug and then steeper so that an annular space about the support receives material or liquid in use. The cutter assembly 7 comprises a plurality of blades disposed in different planes. At least some of the blades are serrated on their leading edges. The lowest point of the blades is generally in alignment with the shallow part of the contour. The blades do not enter the annular space in use.

It can therefore be seen that there are three zones in the jug. There is a lower mix zone in or around the annular space adjacent to the support 8. There is a chop zone in the space around the blades of the cutter assembly 7 and there is a further mix zone in the space above the chop zone. The chop zone is approximately 1/3 of the height of the jug as if the chop zone to mix zone ratio is too high, the blender will tend to overheat. The lower mix zone is ideally at least 8mm, ideally between 8mm-25mm deep so that food and ingredients can fit under the cutter assembly. The lower mix zone should also have a profile to enable mixing and should not be too narrow to avoid creating a dirt trap. A preferred width is between 20-40mm.

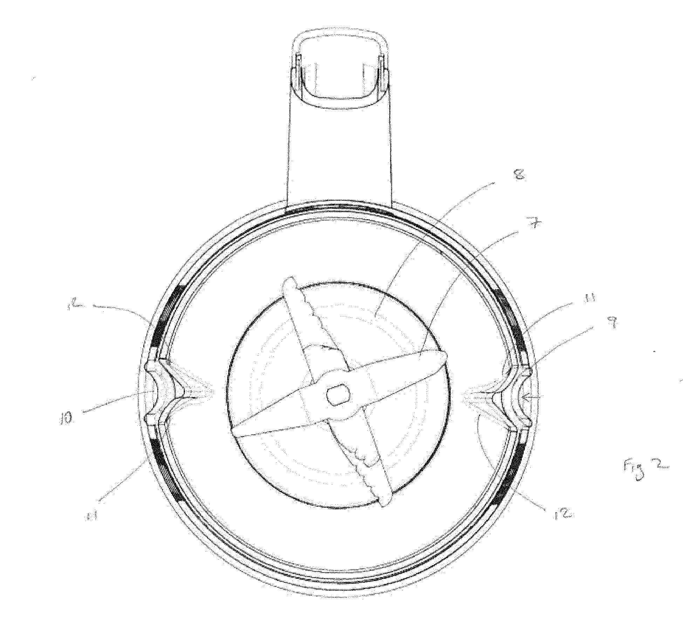

Figure 2 shows a plan view of the blender 1 with the cutter assembly 7 mounted on its support 8. The fins 9,10 are shown on opposed sides of the interior wall of the jug. The fins extend approximately 1/6 of a radius from the interior circumference of the jug towards the interior of the jug. Each fin has two faces 11, 12. The face 11 has a convex curved cross-section such that a tangent at the apex of the fin substantially points to the centre of the jug. The face 12 is substantially straight from the apex. The edge of the apex is curved. It would be possible to have a flat or a point at the apex. In use, the curved face 11 is disposed towards the rotating material and liquid such that the curvature of the face urges the material towards the centre of the jug. A curved indentation is provided in the exterior wall of the jug adjacent to the fin. As the blender will be used with ingredients of different temperatures, the curve enables the jug to expand at non differential rates to enhance its longevity as otherwise the fin. This will also enable the jug to be cleaned in a dishwasher where the temperature.

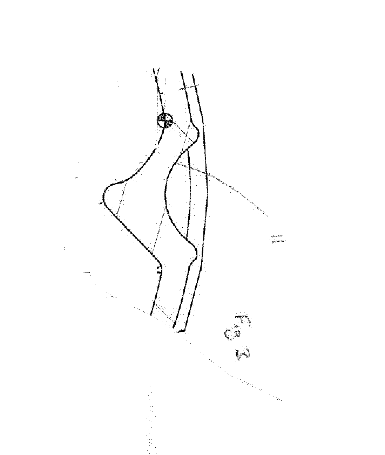

Figure 3 shows a detail of the fin face 11. In a particularly preferred embodiment the blender jug has a radius of approximately 63mm. The distance from the wall of the jug to the apex of the fin is approximately 10mm. The curved face has a radius of curvature of approximately 18mm. The fin extends from approximately 22mm of the interior circumference of the jug. In preferred embodiments, the ratio of the distance of the apex normal to the interior circumference and the interior circumference to the radius of the jug should be between 1/5 and 1/12.

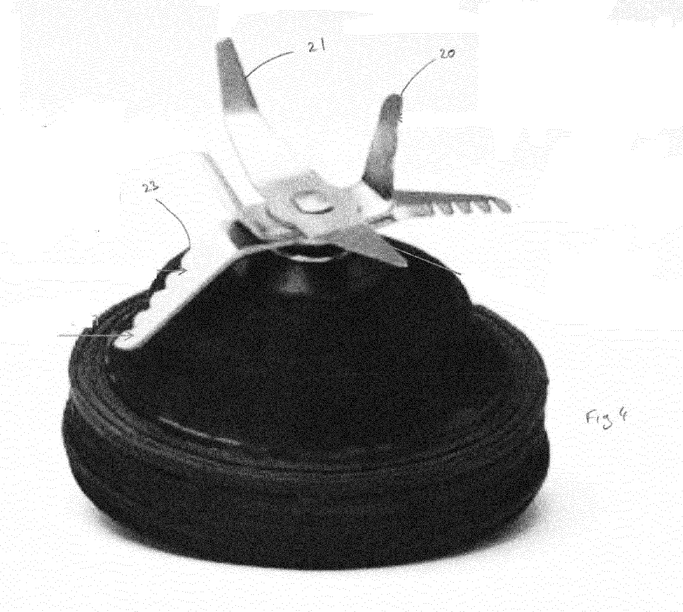

Figure 4 shows the cutter assembly 7 on the support 8. The cutter assembly comprises 3 pairs of opposed blades, with each pair being angled away from the centre of the assembly at a different angle to the other pairs. Ideally each blade is also at an angle to its opposed blade and the other blades. The first pair of blades 20 comprise what is referred to as a bull horn blade, which blades are disposed at a radius of between 2/5 and 1/3 of the radius of the jug and which are angled at around 15-25° to the vertical. The leading edges of these blades are serrated and in use that chop whole fruits and large chunks that in prior art designs tend to sit on top of the cutter assembly.

The main chopping blade 21 has a radius that is generally between 3/5 and 2/3 of the radius of the jug. Of the pair of blades one has an upstanding end whereas the other is generally closer to the horizontal. The third chopping blade pair 23 has a radius of approximately 2/3 of the radius of the jug and is angled downwards with respect to the boss. These blades may be also serrated. This third chopping blade in use agitates food under the main blade either forcing it up to the other blades or chopping it up itself. By positioning the blades in this manner, the cutter assembly effectively rips the liquid apart.

In use, the motor 5 will rotate the cutter assembly 7 at up to 9000 rpm. The presence of the lower mix zone causes a vortex to develop, which pulls the liquid and solids up in the blender. The rotation of the mix around the blender jug 2 generates a wave. As the wave hits the fin 9, the curved face of the fin I 1 causes the material to be urged back towards the blade and the wave collapses in on itself. This leads to much greater mixing than in known, designs, which in turn leads to a more even blend and shorter blender times.

Although the blender has been described as having two fins, it would be possible to increase the number of fins whilst reducing their height. It would also be possible to have a single fin.

## Claims

1. A blender comprising a blender jug (2) adapted to receive a cutter assembly (7), which cutter assembly (7) is driven by a motor (5), wherein the cutter assembly (7) is disposed in the blender jug (2) such that, in use, there is a first mix zone in the jug below the cutter assembly (7) and a second mix zone above the cutter assembly (7), wherein when the motor (5) rotates the cutter assembly (7) a vortex is created in material in the blender jug (2), wherein the blender jug (2) is provided with a fin (9) disposed on an interior surface of the blender jug (2), which fin (9) has a curved face (11), the fin (9) being adapted to impede rotational travel in the material in the blender jug (2)
**characterised in that**
the curved face (11) faces the flow of the material in the blender jug (2) such that the material is urged back towards the cutter assembly (7).

2. A blender according to Claim 1, wherein the curved face (11) has a curved cross-section such that a tangent at the apex of the fin (9) substantially points to the centre of the blender jug (2).

3. A blender according to Claim 1 or Claim 2, wherein the fin (9) is adapted to cause the vortex wave to collapse.

4. A blender according to any one of Claims 1 to 3, wherein the ratio of the distance of an apex of the fin (9) normal to the interior circumference and the interior circumference to the radius of the blender jug (2) is between 1/5 and 1/12.

5. A blender according to any preceding Claim, wherein the chop zone is approximately 1/3 of the height of the blender jug (2).

6. A blender according to any preceding Claim, wherein the fin (9) extends approximately 1/6 of a radius from the interior circumference of the blender jug (2) towards the interior of the blender jug (2).

7. A blender according to any preceding Claim, wherein the blender is provided with two fins (9, 10) located on substantially opposite sides of the Mender jug (2) interior wall.

8. A blender according to, wherein the cutter assembly (7) comprises a plurality of blades (20, 21, 23) disposed in different to one another.
